Europäisches Patentamt

European Patent Office

Office européen des brevets

(11) Publication number: **0 057 807**

**A2**

## EUROPEAN PATENT APPLICATION

(21) Application number: 81850222.1

(22) Date of filing: 19.11.81

(51) Int. Cl.³: **F 16 D 43/21**
**F 16 D 43/286**

(30) Priority: 29.01.81 SE 8100613

(43) Date of publication of application:
18.08.82 Bulletin 82/33

(84) Designated Contracting States:
DE FR GB IT NL

(71) Applicant: FFV Industriprodukter Aktiebolag

S-631 87 Eskilstuna(SE)

(72) Inventor: Olsson, Kjell Evert
P1 1060
S-370 12 Hallabro(SE)

(74) Representative: Avellan-Hultman, Olle
Avellan-Hultman Patentbyra AB P.O. Box 5366
S-102 46 Stockholm 5(SE)

(54) Safety slip-coupling.

(57) A safety coupling of slip-coupling type comprising an in-going or drive shaft (1), which in an axially displaceable manner carries a pressure-disc (6), an out-going or driven shaft (2) which in turn carries a counter-pressure disc (11), means eg. springs (12) which force the pressure-disc (6) into friction engagement with the counter pressure disc (11). The drive shaft (1) also carries a fluid-tight coupling case (3) enclosing both coupling discs (6, 11) and which contains a determined amount of pressure medium which forms to a rotating ring or mass of oil (21) as the coupling-case rotates. The pressure-disc (6) and the counter-pressure disc (11) form between them a closed cavity (15) which connects via one or several channels (16) to the rotating oil mass (21) in the coupling case (3). The orifice (18) of the channels can be faced in an opposite direction to the normal direction of rotation of the coupling-case. With the incurrence of relative rotation between in- and out-going shafts, oil is pressed from the rotating mass of oil (21), through the channel or channels (16), to the closed cavity (15) of the coupling-discs where a pressure is built up and releases the coupling discs.

FIG. 1

Croydon Printing Company Ltd.

FFV INDUSTRIPRODUKTER AKTIEBOLAG

Safety slip-coupling.

The present invention generally relates to a friction-coupling and more particularly a kindof friction-coupling, which is intended as a safety slip-coupling and which is capable of conveying a torsional moment from an in-going shaft to an out-going shaft up to a pre-determined and preferably adjustable moment, but which disengages the out-going shaft and keeps it dis-engaged from the driving shaft when the pre-determined moment is exceeded, until the coupling by one or more manual or otherwise controlled operations is reset.

In many cases there is a need for a safety coupling, which, when a pre+determined torsional moment is exceeded, breaks the engagement from the driving shaft to shaft of the rotated object. Known kinds of such safety couplings can consist of break-pins which shear when the pre-determined moment is exceeded. However, it can be difficult to determine with sufficientaccuracy the moment at which the break-pin shears and the engagement between the driving and driven shaft is broken. A break-pin coupling usually has the disadvantage that the engagement between the two shafts is rigid.

The safety coupling can even be formed as an ordinary slip-coupling, where a driven pressure-disc is flexibly forced against a counter-pressure disc, usually in conjunction with a friction surface, friction-plate or such, and where the force of the pressure plate against the counter pressure-plate is adjusted so that the c uplingbegins to slip when a pre-determined torsional moment is reached. These couplings also have the disadvantage that it is difficult with any accuracy to adjust the pressure, by which the pressure-plate is forced against the counter pressure-plate, so that slip begins at the required torsional moment. The coupling also has the disadvantage that a relatively large torsional moment continues to be conveyed even when the coupling begins to slip and a momentary and substantial reduction of the conveyed moment is not established. With excessive slip and a large difference in rotational speed between the pressure-plate and the counter-pressure-plate there even arises a risk for overheating.

The same problems which arise with the above described slip-coupling are also evident with many hydro-dynamic couplings.

The aim of the present invention is to remove the disadvantages described above and to provide a safety coupling, in the form of a slip-coupling which, with increases of torsional-moment closely above a conveyed pre-determined moment begins to slip, but with a substantial excess of the established maximum limit for moment conveyance the coupling disengages and considerably lessens the conveyed moment and remains disengaged until it is reset by manual or other means.

The coupling according to the invention, is even formed in such a way that good lubrication and cooling is provided when the coupling is disengaged, even when there is a large difference between the rotational speeds of the in and outgoing shafts.

A coupling of this kind is well suited as a safety-coupling which disengages with serious over-loads or safety stops and so on.

According to the invention the coupling comprises fluid-tight coupling-case, whichb is partly filled with a fluid, for example hydraulic-oil, which is attached to the ingoing or drive-shaft and which rotatingly supports an outgoing shaft. The rotatable case supports a pressureüdisc, and the out-going shaft supports a counter pressure-disc, and both discs are arranged to be forced against each other with a pre-determined and preferably adjustable pressure for the conveyance of a torsional moment from one shaft to the other. Between both discs is a cavity,whichvia one or more channels is connected to a position close to the case's inner wall, preferably through an orifice which is faced opposite to the case's normal direction of rotation.

Normally the in and out-going shaft's pressure discs are forced together under a pre-determined pressure, whichh convey a torsional moment from the ingoing to the outgoing shaft. The oil in the case is kept at or close to case´s wall as a result of centrifugal force. When the conveyed torsional moment approaches the pre-determined maximum moment, the ingoing shaft´s coupling-plate begins to slip in relation to the out-going shaft´s plate, and when the relative rotation between the in-going shaft´s pressure-plate and the out-going shaft´s pressure-plate exceeds a certain valve, the oil from the case is forced through the channel or channels to the cavity between the pressure plates, wherein a pressure is built up, which eventually parts the pressure-plates from each other. At this stage the torsional moment is reduced drastically at the same time as the speed of the out-going shaft is also substantially reduced. Oil isthen continually circulated through the channel or channels into the cavity between the pressure-plates and out between the pressure-plates, whereby the oil lubricates and cools the pressure-plates.

In some cases the oil-pressure from the case is not sufficient to enable an adequate dis-engagement. For this purpose one or both friction-surfaces can be provided with radial grooves through which the oil flows when the coupling rotates. The oil in the grooves assists in dis-engagement and in the dis-engaged condition, provides the friction surfaces of the coupling with good lubrication.

Further characteristics of the invention will beevident from the following detailed description in which reference will be made to the accompanying drawings.

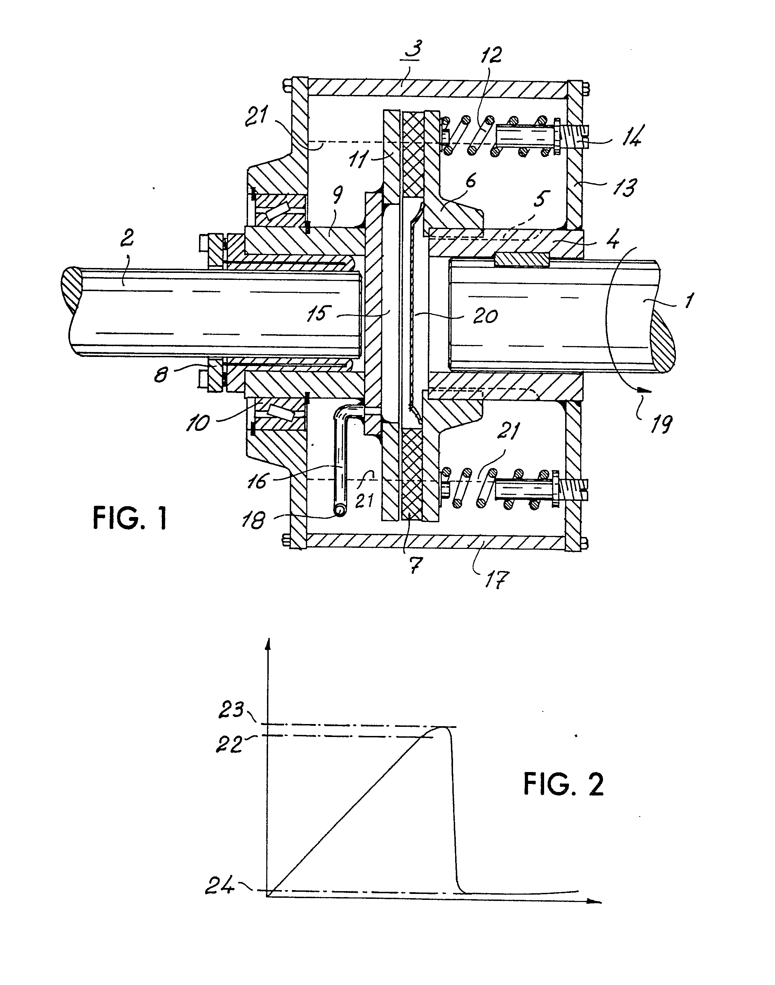

In the drawings Figure 1 shows an axial section of one embodiment of a safety-coupling according to the invention, and Figure 2 shows a moment diagram of the torsional moment conveyed by the coupling.

The safety coupling shown in Figure1 is intended to drive an out-going shaft 2 from an in-going shaft 1, to which a drive-motor (not shown) is applied. The ingoing shaft 2 is attached to a fluid tight coupling-case 3, via a sleeve 4 with outside splines 5. On the splines 5 of the sleeve 4 a pressure-disc 6 with inside splines is displaceably mounted. On the surface turned towards the out-going shaft, the pressure-plate 6 can be furnished with a friction layer 7.

The out-going shaft 2 is mounted by a removable bushing 8 to a flanged sleeve 9, which by a roller bearing 10 is rotatable in the coupling-case 3 with the out-going shaft 2 concentric with the in-going shaft. The sleeve 9 of the out-going shaft supports a counter-pressure disc 11, the dimension of which is the same as pressure-disc 6. The flanged sleeve 9 with the counter-pressure-disc is rigidly assembled in the axial direction of the coupling-case and the pressure-disc 6 is arranged to be forced against the counter-pressure disc 11 by a number of springs 12, which are positioned between the end wall 13 of the coupling-case on the side of the in-going shaft and the pressure-disc. The force of the springs 12 can be adjusted by adjustment screws 14, which pass through the end wall 13. The pressure-disc 6 and counter-pressure-disc 11 are formed in such a way that between the pressure-discs is a closed cavity 15, from which one or more channels, in the embodiment shown in the form of pitot-type tubes 16, extend outwards towards the cylindrical wall 17 of the coupling-case. The orifice 18 of the channel or pitot tube 16 is faced opposite to the normal direction of rotation of the coupling-case, which is shown in the drawings by the arrow 19. The pressure-disc 6 is sealed by a circular plate 20 so that the only outward connection of the closed cavity 15 is made by the channel or pitot tube 16. The coupling-case is intended to contain a certain amount of oil, for example hydraulic-oil, which at the rotation of the coupling-case is thrown outwards towards the cylindrical wall 17 of the case and forms a position shown by the dotted line 21.

When stationary the pressure-disc 6 is pressed against the counter-pressure-disc 11, and when the in-going shaft begins to rotate a moment is immediately conveyed to the out-going shaft. As the rotational speed increases, the hydraulic-oil is thrown outwards to the cylindrical wall 17 of the case. As is shown in Figure 2 moment diagram, where the horizontal axis shows the in-going torsional moment and the vertical axis shows the out-going torsional moment the in and out-going shafts 1 and 2 rotate as a unit up to a certain level, which is determined by the force by which the springs 12 force the pressure-disc 6 against the counter-pressure-disc 11.
When the moment of the out-going shaft reaches the level 22 slipping begins, whereby the coupling-case with pressure-disc 6 will begin
to rotate at a speed which increases in relation to the speed of
the counter-pressure-disc. The oil 21 follows the rotation of the
coupling-case and when the relative speed of rotation between the
in-going and out-going shafts reaches a certain level, oil is forced
into the orifice of the pitot tube 16, and into the closed cavity
15 between pressure-disc 6 and counter-pressure-disc 11. The pressure in the cavity 15 builds up very quickly and causes a displacement of the pressure-disc 6 from the counter-pressure-disc 11, which
is made possible by the splines-coupling between pressure-disc 6
and the sleeve 4. The conveyed moment is thereby very quickly reduced
to a level 24 very much lower than the pre-determined maximum level
23 and this low level of moment is maintained practically unchanged
even if the speed of the in-going shaft should increase. As a result
of that the pressure-disc 6 is displaced from the counter-pressure-
disc 11, an oil circulation is established by the fact that oil is
continued to be pressed into the channel or pitot tube 16, through
the now open cavity 15 and between the friction layer 7 and the
counter-pressure-disc 11, in an continuous flow. The flow of oil
causes partly lubrication and reduced friction, and partly cooling
of the parts of the coupling rotating in relation to one another.

The coupling remains dis-engaged until the drive-motor on the
in-going shaft 1 is stopped, whereby the springs 12 force the oil out
of cavity 15 and presses the friction layer 7 against the counter-
pressure disc 11. Thereafter the device can be re-started as described above. As described the maximum torsional moment, which the
coupling can convey, is controlled by adjustment of the springs 12.
The level between the maximum conveyed moment 23 and the level 22,
where the coupling begins to slip, can in turn be controlled by
varying the position of the connection channels or the pitot tubes 16.
Large or several channels or tubes produce a faster build-up of
pressure in the cavity 15, and thereby a faster total or near total
dis-engagement between the pressure-disc 6 and counter-pressure-
disc 11. Positioning the pitot-tubes the orifice 18 close to the cylindrical wall 17 of the coupling-case brings about a faster and higher pressure than an orifice 18 position closer to the centre of the coupling-case.

To assist dis-engagement the friction surfaces on the friction layer or counter-pressure disc or both, can be furnished with radial grooves, which assist dis-engagement and provide good lubrication between the friction surfaces. The channels or grooves in the friction surfaces can run strictly radially or with a certain slope in the normal direction of rotation of the coupling. Obviously, two systems of grooves or channels canbe arranged, where the slope in both systems form an angle to the radius and on each direction therefrom.

It is obvious that the channels or pitot tubes 16 can be formed by another means, for example as channels directly in the counter-pressure disc 11, or even channels in the surface of the counter-pressure disc which is faced towards the friction layer 7. It is also obvious that the springs 12 which force the pressure-disc 6 against the counter-pressure disc 11, can be formed in any otherknown way, or that the force between the two discs 6 and 11 can be effected by known hydraulic cylinders or such.

In an alternative arrangement of the invention, the pitot-tube 16 can be formed with two limbs pointed in each direction, and in which each limb can contain a check-valve which allows oil to be pressed into the tube but not out. In this way the coupling can dis-engage without regard to the direction of rotation. When rotating in one direction, oil is pressed into one of the tubes, but is prevented from being suckedout of the other tube by the check-valve.

A practical form of the invention hasbeen madein such a way that it is necessary for a speed difference of between 300 and 500 RPM between the in-going shaft 1 and the out-going shaft 2 so that the drastical reduction of the conveyed moment can occur. It is obvious for an expert in the art that the safety-coupling even canbe formed in such a way that the in-going shaft 1 does not need to be stopped entirely to enable the coupling to be re-started, but that it is enough with a certain reduction of the relative speeds between the in- and out-going shafts.

It is to be understood that the above described embodiments of the invention, which are illustrated in the drawings, are only illuminations examples and that all kinds of modifications may be presented in the scope of the appended claims.

Claims

1.  Safety coupling of slip-coupling type comprising an in-going shaft (1), on which a pressure disc (6) is displaceably mounted, an out-going shaft (2), onwhich a counter-pressure disc (11) is mounted, together with a means (12) to force the pressure disc (6) against the counter-pressure disc (11), c h a r a c t e r i z e d  in that the pressure-disc (6) and counter-pressure-disc (11) are enclosed in a fluid tight coupling-case (3), which is partly filled with a pressure fluid (21), that between the pressure-disc (6) and counter-pressure-disc (11) is a closed cavity (15), which via one or more channels (16) connects in the coupling-case (3), at some point between the centre of rotation and the axially extended wall of the coupling-case (3) and with the oil-mass (21) when in rotation together with the coupling-case (3).

2.  Coupling according to claim 1, c h a r a c t e r i z e d in that the orifice (18) of the connection channel or channels (16) between the closed cavity (15) of the coupling-discs (6, 11) and the rotating oil-mass (21), is faced in an opposite direction to the normal direction of rotation of the coupling-case (3).

3.  Coupling according to claims 1 or 2, c h a r a c t e r i z e d  in that the means to force the pressure-disc (6) against the counter-pressure-disc (11) is provided by one or more springs (12), the force of which can be adjusted.

4.  Coupling according to any of the preceding claims, c h a r a c t e r i z e d  in that the displaceable pressure -disc (6) on the in-going shaft (1) is sealed by a circular plate (20) which allows an axial movement of the pressure-disc (6).

5.  Coupling according to any of the preceding claims, c h a r a c t e r i z e d  in that the orifice (18) of the channel or channels (16) between the closed cavity (15) of the coupling discs and the rotating oil-mass (21), is adjustable to any chosen distance between the centre of rotation and the rotating outer wall (17) of the coupling-case.

6.  Coupling according to any of the preceding claims, c h a - r a c t e r i z e d  in that the friction-surface of the pressure disc (6) or the counter-pressure disc (11) or both are provided with substantially radial grooves or channels which connect the closed cavity (15) with the inside of the coupling-case (3).

7.  Coupling according to claim 6,  c h a r a c t e r i z e d in that the grooves or channels in one or both friction surfaces, are narrow and lie at an angle away from the radius in a direction opposite to the direction of rotation.

8.  Coupling according to claim 2,  c h a r a c t e r i z e d in that it comprises two connection channels (16), pointed in opposite directions, and that each channel contains a check-valve, which prevents oil from being sucked or pressed out through the channel directed with the direction of rotation.

FIG. 1

FIG. 2

0057807

1/1